Europäisches Patentamt

European Patent Office

Office européen des brevets

(11) Veröffentlichungsnummer: **0 540 826 B1**

(12) **EUROPÄISCHE PATENTSCHRIFT**

(45) Veröffentlichungstag der Patentschrift: **08.03.95**

(51) Int. Cl.⁶: **F16D 69/02**

(21) Anmeldenummer: **92112990.4**

(22) Anmeldetag: **30.07.92**

(54) **Asbestfreies Reibmaterial für Eisenbahn-Bremsbeläge.**

(30) Priorität: **26.10.91 DE 4135389**

(43) Veröffentlichungstag der Anmeldung:
**12.05.93 Patentblatt 93/19**

(45) Bekanntmachung des Hinweises auf die
Patenterteilung:
**08.03.95 Patentblatt 95/10**

(84) Benannte Vertragsstaaten:
**AT BE CH DE DK ES FR GB GR IT LI LU NL PT
SE**

(56) Entgegenhaltungen:
**DE-U- 9 114 265
FR-A- 2 532 022
GB-A- 1 476 429
US-A- 4 363 884**

(73) Patentinhaber: **RÜTGERS PAGID AKTIENGE-
SELLSCHAFT
Westuferstrasse 7
D-45356 Essen (DE)**

(72) Erfinder: **Koch, Winfried
Pützweg 23
W-5060 Berg. Gladbach 2 (DE)**
Erfinder: **Eckert, Armin
Mittelkamp 41
W-4355 Waltrop (DE)**

Rank Xerox (UK) Business Services
(3.10/3.09/3.3.3)

**Beschreibung**

Die Erfindung betrifft ein asbestfreies Reibmaterialgemisch für Scheiben- und Klotzbremsen, wie sie bei Eisenbahnen Verwendung finden.

Reibmaterialgemische der vorstehenden Art sind an sich bekannt. Sie bestehen für organisch gebundene Reibbeläge aus einem organischen Bindemittel, mineralischen Füllstoffen, Schmierstoffen, Metallen und gegebenenfalls weiteren Zusätzen.

Die Reibbeläge werden nach den Vorschriften des Internationalen Eisenbahnverbandes UIC geprüft, bevor sie freigegeben werden. Die Prüfung beinhaltet die Bestimmung der Reibwerte in Abhängigkeit von der Radgeschwindigkeit bei unterschiedlichen Bremskräften und von der Bremsdauer abhängigen Temperaturen mit trockener und nasser Bremsscheibe.

Da bei der Naßbremsung insbesondere bei niedrigen Anpreßdrücken kaum noch eine Bremswirkung festzustellen ist, wurde versucht, die Bremswirkung durch Formgestaltung der Reibbeläge zu verbessern. Scharfe Kanten sollten dafür sorgen, daß nur wenig Wasser zwischen Bremsscheibe und Reibbelag eindringen kann, und Nuten auf der Oberfläche des Reibbelages sollten das eingedrungene Wasser rasch abführen. Diese Maßnahmen führen nur bei sehr harten Belägen zum Erfolg. Diese harten Beläge bewirken aber einen starken Verschleiß der Bremsscheibe.

Aus der US-A 4,363,884 ist ein asbestfreies Reibmaterial auf der Basis von Partikeln und/oder Fasern aus einem eisenhaltigen Metall und einem wärmehärtbaren Bindemittel bekannt, das als Korrosion verhütenden Zusatz Phosphorsäure oder Phosphate enthalten kann. In den Beispielen ist als Binder ein Gemisch aus 10 Gew.-% Nitrilkautschuk und 8 Gew.-% Phenolharz angegeben. Phosphorsäure bzw. Phosphate werden in einer Menge von 0,05 bis 9 Gew.-% zugesetzt. Dem Fachmann ist bekannt, daß für diesen Zweck im wesentlichen Zink-, Mangan- und Schwermetallphosphate neben Phosphorsäure verwendet werden (Römpp Chemie Lexikon, 9. Auflage, Seite 3378). Diese Phosphate verbessern jedoch die Reibwerte der Beläge bei der Naßbremsung nicht. Außerdem führt auch die Verwendung von Nitrilkautschuk allein oder im Gemisch mit Phenolharzen als Bindemittel nicht zu dem gewünschten Erfolg.

Es bestand daher die Aufgabe, ein asbestfreies Reibmaterialgemisch zu entwickeln, das die Reibwerte der Reibbeläge bei Naßbremsung verbessert.

Die Aufgabe wird erfindungsgemäß dadurch gelöst, daß als Bindemittel ein Gemisch aus einem Nitrilkautschuk und einem mit Peroxiden vernetzten Polybutadien-Flüssigharz verwendet wird, wobei das Mischungsverhältnis Nitrilkautschuk zu Polybutadien-Flüssigharz 1 : 10 bis 10 : 1 beträgt, und ein Teil der mineralischen Füllstoffe durch Alkali-, Erdalkali- und/oder Ammoniumphosphate bzw. deren Mono- oder Dihydrogenphosphate in einer Menge von 7 bis 40 Gew.-% bezogen auf das Reibmaterialgemisch ersetzt wird, wobei das Verhältnis Phosphat zu Polybutadien-Flüssigharz im Bereich von 3 : 3 bis 10 :3 liegt. Die Phosphate können Kristallwasser enthalten oder auch kristallwasserfrei sein.

Als Peroxid wird vorzugsweise Natriumperoxid im Verhältnis Polybutandien-Flüssigharz zu Peroxid von 8 : 1 bis 15 : 1 verwendet.

Mineralische Füllstoffe sind beispielsweise Baryt und Magnesiumoxid in Pulverform. Metalle können sowohl in Form von Pulvern als auch als Faser zugesetzt werden. Schmierstoffe sind vor allem Kohlenstoffpulver wie Graphit, Ruß und Koks.

Ein Reibmaterialgemisch für organisch gebundene Reibbeläge für Eisenbahn-Scheibenbremsen enthält in der Regel:

5 bis 20 Gew.-% Bindemittel,

10 bis 50 Gew.-% mineralische Füllstoffe,

10 bis 30 Gew.-% Schmierstoffe,

10 bis 65 Gew.-% Metalle in Form von Fasern

und/oder Pulvern und ggf. noch geringe Anteile an Härtungsbeschleunigern, Reibstützern und ähnlichen Komponenten.

Reibmaterialien für organisch gebundene Reibbeläge für Eisenbahn-Klotzbremsen (Bremssohlen) bestehen aus

10 bis 35 Gew.-% Bindemitteln,

20 bis 60 Gew.-% mineralische Füllstoffen,

5 bis 40 Gew.-% Schmierstoffen,

bis zu 50 Gew.-% Metallen und ggf.

Härtungsbeschleunigern, Reibstützern wie beispielsweise Aluminiumoxid und ähnlichen Zusätzen.

Die Reibbeläge für Scheibenbremsen wurden nach der UIC-Prüfvorschrift 541-3 VE, Anlage 3c geprüft (Prüfprogramm Nr. 3 für Bremsversuche mit benäßten Bremsscheiben am Reibungsprüfstand) und die für Klotzbremsen nach der UIC-Prüfvorschrift 541-4 VE, Anlage 4 a (Versuchsprogramm für Bremsklotzsohlen aus Verbundstoff mit hohem Reibwert/A-Achslast 12 t).

Das Prüfungsprogramm ist in den Tabellen I und II wiedergegeben. Das Diagramm zeigt die Reibungskoeffizienten bei den im Prüfprogramm 541-3 VE festgelegten Bremsungen. Jeder Bremszyklus besteht aus zwei Abschnitten mit Haltebremsungen bei Geschwindigkeiten von 80 bis 200 km/h und einen Bremsdruck von 45 bis 55 N/cm$^2$ sowie einer Bremsung bei einer Geschwindigkeit von 120 km/h und einem Bremsdruck von 20 N/cm$^2$. Die Trockenbremsprüfung besteht aus zwei solcher Zyklen (Bremsung Nr. 1 bis 18) und die Naßbremsung mit einer Wassermenge von 25 dm$^3$/h bei einer Bremsscheibe von 640 mm Durchmesser aus drei solcher Zyklen (Bremsung Nr. 19 bis 45). Der trockene Nennreibwert für Radgeschwindigkeiten bis 140 km/h beträgt $^0$ = 0,35 und fällt linear bis auf einen Wert von 0,31 für eine Geschwindigkeit von 200 km/h. Für die Naßreibung darf dieser Wert nur bis $^0$ = 0,25 abfallen.

Wie aus der Tabelle II ersichtlich, ist das Versuchsprogramm zur UIC-Prüfvorschrift 541-4 VE dahingehend abgeändert worden, daß statt zwei Bremsungen bei allen Geschwindigkeiten jeweils vier Bremsungen durchgeführt wurden. Außerdem wurden auch Naßbremsungen bei einer Geschwindigkeit von 30 km/h (500 daN) und von 160 km/h (2500 daN) zusätzlich durchgeführt.

Die Reibwerte wurden an Rädern mit einem Durchmesser von 860 ± 5 mm und einer Sohle je Rad bestimmt. Bei einer auf die Sohle wirkenden Kraft von F & 1000 daN soll der mittlere Reibwert bei einer Geschwindigkeit von 50 km/h für die trockene Bremsung nicht mehr als $^0$m = 0,40, vorzugsweise nicht mehr als $^0$m = 0,33 betragen. Dieser obere Grenzwert fällt linear bis auf $^0$m = 0,30, vorzugsweise $^0$m = 0,23 bei einer Geschwindigkeit von 160 km/h ab. Bei F > 2000 daN soll der mittlere Reibwert bei einer Geschwindigkeit von 50 km/h nicht unter $^0$m = 0,20, vorzugsweise nicht unter $^0$m = 0,22 und bei einer Geschwindigkeit von 160 km/h nicht unter $^0$m = 0,17, vorzugsweise nicht unter $^0$m = 0,20 liegen. Unter dem Einfluß von Nässe darf der mittlere Reibwert höchstens um 15 % von dem Wert bei der entsprechenden Trockenbremsung abweichen.

EP 0 540 826 B1

Die Erfindung wird anhand der Beispiele näher beschrieben.

Tabelle I:

UIC-Prüfvorschrift 541-3 VE, Anlage 3c

Prüfprogramm Nr. 3 für Bremsversuche mit benässten Bremsscheiben am Reibungsprüfstand

| Bremsung Nr. | | | Geschwindig- keit | P | Ausgangs- temperatur |
|---|---|---|---|---|---|
| | | | km/h | N/cm² | °C |
| | | | | | Trocken- bremsung |
| 1 | 10 | | 80 | 40 | 20 bis 60 |
| 2 | 11 | | 120 | 20 | |
| 3 | 12 | | 120 | 40 | |
| 4 | 13 | | 160 | 40 | |
| 5 | 14 | | 200 | 40 | |
| 6 | 15 | | 80 | 55 | |
| 7 | 16 | | 120 | 55 | |
| 8 | 17 | | 160 | 55 | |
| 9 | 18 | | 200 | 55 | |
| | | | | | Nassbremsung |
| 19 | 28 | 37 | 80 | 40 | 20 |
| 20 | 29 | 38 | 120 | 20 | |
| 21 | 30 | 39 | 120 | 40 | |
| 22 | 31 | 40 | 160 | 40 | |
| 23 | 32 | 41 | 200 | 40 | |
| 24 | 33 | 42 | 80 | 55 | |
| 25 | 34 | 43 | 120 | 55 | |
| 26 | 35 | 44 | 160 | 55 | |
| 27 | 36 | 45 | 200 | 55 | |

4

Tabelle II:

UIC-Prüfvorschrift 541-4 VE.

Prüfprogramm A für Bremsklotzsohlen aus Verbundstoff
mit hohem Reibwert (K-Sohlen); Achslast 12 t.

.

| Bremsung Nr. | Geschwindig- keit | F | Bemerkung |
|---|---|---|---|
| | km/h | daN | |
| 1 - 4 | 30 | 500 | Haltebremsung |
| 5 - 8 | 50 | 500 | trocken |
| 9 - 12 | 120 | 500 | |
| 13 - 16 | 30 | 500 | Haltebremsung |
| 17 - 20 | 50 | 500 | naß |
| 21 - 24 | 120 | 500 | Wassermenge 14 l/h |
| 25 - 28 | 50 | 2500 | Haltebremsung |
| 29 - 32 | 120 | 2500 | trocken |
| 33 - 36 | 160 | 2500 | |
| 37 - 40 | 50 | 2500 | Haltebremsung |
| 41 - 44 | 120 | 2500 | naß |
| 45 - 48 | 160 | 2500 | Wassermenge 14 l/h |

Beispiele

Beispiel 1

Ein Reibmaterialgemisch aus 12,9 Gew.-% Bindemittel, aus 70 Gew.-% Nitrilkautschuk, 27 Gew.-% mit Natriumperoxid vernetztem Polybutadien-Flüssigharz und 3 Gew.-% \l aus Cashewnußschalen, 36,5 Gew.-% mineralischen Füllstoffen aus 62 Gew.-% Bariumsulfat und 38 Gew.-% Magnesiumoxid, 27,6 Gew.-% Schmierstoffen und 23 Gew.-% Metallpulvern und -fasern, wie es für die Herstellung eines organisch gebundenen Reibbelags für Eisenbahn-Scheibenbremsen üblich ist, wird zu Bremsbelägen entsprechend der Vorschrift 541-3 VE, Anlage 1a mit einer Reibfläche von 200 cm$^2$ verarbeitet. In gleicher Weise werden Bremsbeläge gemäß der Erfindung hergestellt aus einem Reibmaterialgemisch gleicher Zusammensetzung, dem aber 10 Gew.-% eines Gemisches aus kristallwasserhaltigem und -freiem Trinatriumphosphat beigefügt sind bei entsprechend verringerter Menge der anderen Füllstoffe.

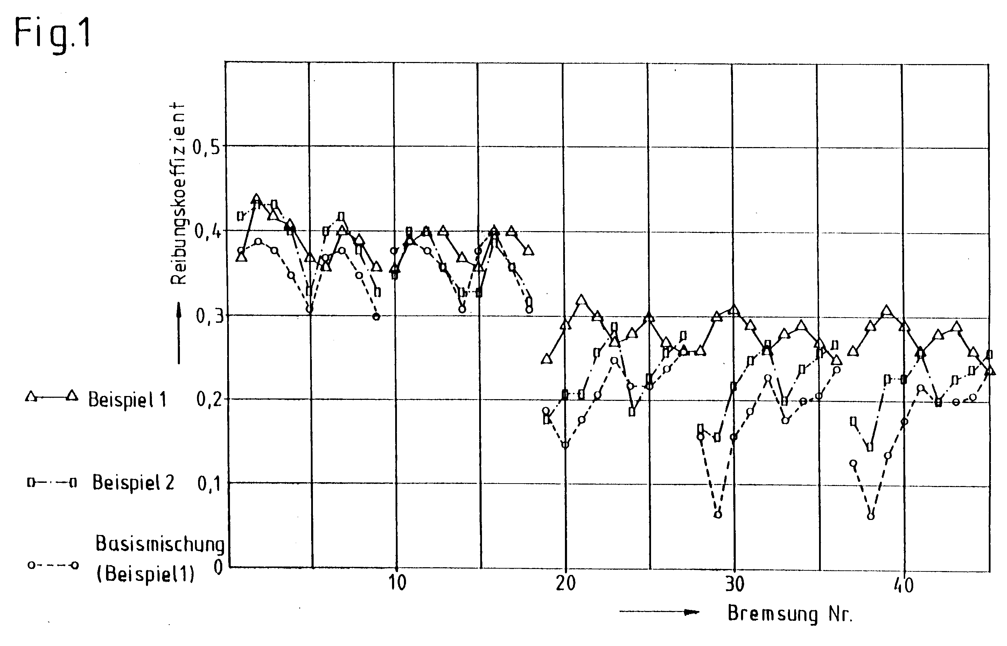

Die Reibungskoeffizienten entsprechend der Prüfvorschrift 541-3 VE, Anlage 3c sind in Fig. 1 dargestellt.

Beispiel 2 (Vergleich)

Wie in Beispiel 1 wird ein Bremsbelag mit 10 Gew.-% Tricalciumphosphat statt Trinatriumphosphat hergestellt, und seine Reibungskoeffizienten bestimmt. Die Ergebnisse sind ebenfalls in Fig. 1 dargestellt.

Beispiel 3

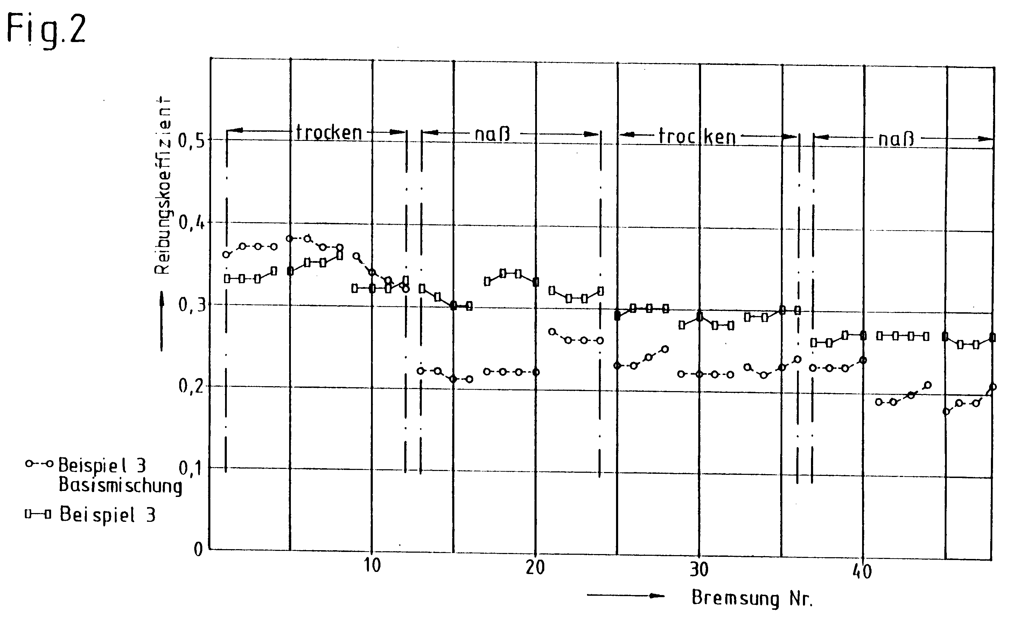

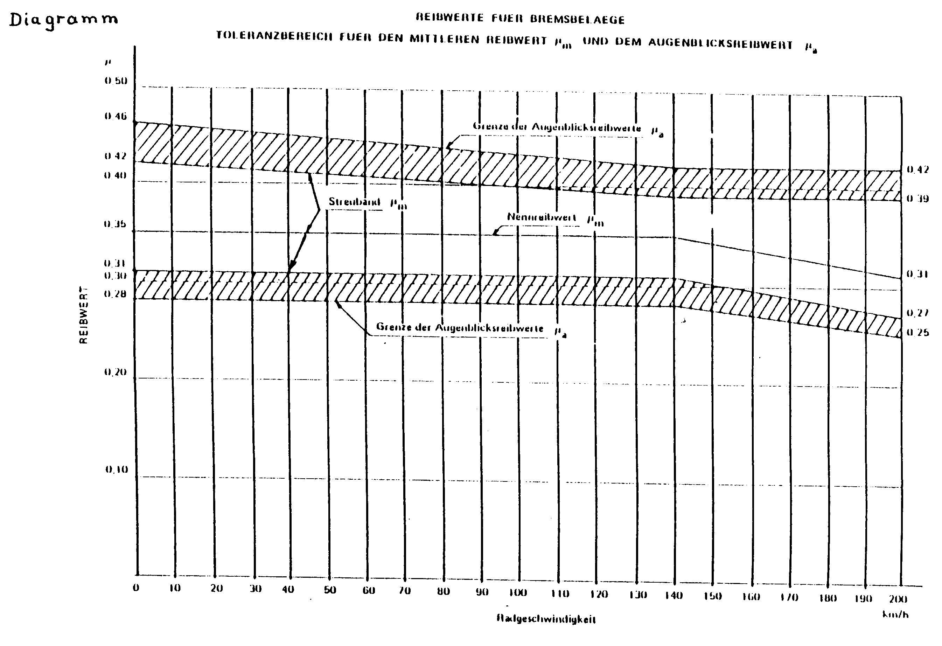

Aus einem Reibmaterialgemisch aus 21 Gew.- % Bindemittel, wie im Beispiel 1, 23,5 Gew.-% mineralischen Füllstoffen, 33 Gew.-% Schmierstoffen, 20,5 Gew.-% Metallpulver und 2 Gew.-% Reibstützer wie es für die Herstellung organisch gebundener Klotzbremsen üblich ist, werden in üblicher Weise Bremssohlen hergestellt und nach der UIC-Vorschrift 541-4 VE geprüft. Mit dem gleichen Gemisch, das aber 15 Gew.-% kristallwasserhaltiges Mononatriumdihydrogenphosphat und 8,5 % mineralische Füllstoffe enthält, werden gemaß der Erfindung ebenfalls Bremssohlen hergestellt und ihre Reibungskoeffizienten bestimmt. Die Ergebnisse der Bremsversuche sind in dem Diagramm in Fig. 2 gegenübergestellt.

Wie aus Figur I ersichtlich, wird bei der Verwendung üblicher Reibmaterialgemische (Basismischung) der geforderte Reibungskoeffizient bei der Naßbremsung (0,25) mit geringer Bremskraft nicht erreicht. Er verbessert sich bei sehr hoher Geschwindigkeit und höherem Anpreßdruck. Im Gegensatz dazu zeigt das erfindungsgemäße Gemisch bei der Naßbremsung eine wesentlich geringere Schwankungsbreite bei den unterschiedlichen Geschwindigkeiten und Druckverhältnissen. Die Reibungskoeffizienten liegen über der Sollgrenze. Der Zusatz von Tricalciumphosphat (Beispiel 2) hingegen zeigt nur eine geringere Wirksamkeit.

Wie in Figur 2 dargestellt, werden von den üblichen Reibbelagsmischungen (Basismischung) für Bremsklotzsohlen die Anforderungen der UIC-Prüfvorschrift für die Trockenbremsungen erfüllt. Die Abweichungen bei den Naßbremsungen bei Anpreßkräften von 2500 daN liegen ebenfalls in dem vorgegebenen Toleranzbereich. Bei geringerer Flächenpressung (F = 500 daN) weichen die Reibwerte bei den Naßbremsungen von denen bei den entsprechenden Trockenbremsungen in nicht mehr zulässigen Größenordnungen ab, und zwar bei geringeren Geschwindigkeiten stärker (ca. 40 %) als bei hohen Geschwindigkeiten (ca. 20%).

Durch den Ersatz eines Teiles der mineralischen Füllstoffe durch Mononatriumdihydrogenphosphat wurden die Reibungskoeffizienten der Naßreibung so verbessert, daß sie nun nur etwa 10 % von den Werten der Reibungskoeffizienten bei der Trockenreibung abweichen. Zusätzlich wurden noch die Reibwerte bei hoher Flächenpressung verbessert.

Entsprechende Versuche mit üblicherweise eingesetzten Pulverharzen, SBR- und NBR-Kautschuk als Bindemittel führten nicht zu dem gewünschten Erfolg.

**Patentansprüche**

1. Asbestfreies Reibmaterial für Eisenbahn-Bremsbeläge bestehend aus einem organischen Bindemittel, das Nitrilkautschuk enthält, aus mineralischen Füllstoffen, Schmierstoffen, Metallen und ggf. weiteren üblichen Zusätzen, **dadurch gekennzeichnet**, daß als Bindemittel ein Gemisch aus einem Nitrilkautschuk und einem mit Peroxiden vernetzten Polybutadien-Flüssigharz verwendet wird, wobei das Mischungsverhältnis Nitrilkarntschuk zu Polybutadien-Flüssigharz 1:10 bis 10:1 beträgt, und ein Teil der mineralischen Füllstoffe durch Alkali-, Erdalkali- und/oder Ammoniumphosphate, bzw. deren Mono- oder Dihydrogenphosphate in einer Menge von 7 bis 40 Gew.-% bezogen auf das Reibmaterialgemisch ersetzt wird, wobei das Verhältnis Phosphat zu Polybutadien-Flüssigharz im Bereich von 3:3 bis 10:3 liegt.

2. Reibmaterial nach Anspruch 1, **dadurch gekennzeichnet**, daß als Peroxid Natriumperoxid verwendet wird.

3. Reibmaterial nach Anspruch 1 oder 2, **dadurch gekennzeichnet**, daß als Phosphat ein kristallwasserhaltiges Phosphat verwendet wird.

4. Reibmaterial nach Anspruch 1 oder 2, **dadurch gekennzeichnet**, daß als Phosphat ein Gemisch aus kristallwasserhaltigem und kristallwasserfreiem Phosphat verwendet wird.

**Claims**

1. Am asbestos-free friction material for brake linings for railway traffic comprising an organic binding agent which contains nitrile rubber made of mineral fillers, lubricants, metals and, optionally, other conventional additives, **characterised in that** a mixture of a nitrile rubber and a polybutadiene liquid resin cured with peroxides is used as a binding agent, the mixture ratio of nitrile rubber to polybutadiene liquid resin being 1 : 10 to 10 : 1, and a part of the mineral fillers being replaced by alkali phosphates, alkaline-earth phosphates, and/or ammonium phosphates, and/or monohydrogenphosphates or dihydrogenphosphates thereof in an amount of from 7 to 40% by weight in relation to the friction material mixture, the ratio of phosphate to polybutadiene liquid resin ranging from 3 : 3 to 10 : 3.

2. A friction material according to Claim 1, **characterised in that** sodium peroxide is used as a peroxide.

3. A friction material according to Claim 1 or 2, **characterised in that** a phosphate containing water of crystallisation is used as a phosphate.

4. A friction material according to Claim 1 or 2, **characterised in that** a mixture of phosphate containing water of crystallisation and phosphate free from water of crystallisation is used as a phosphate.

**Revendications**

1. Matériau de friction exempt d'amiante pour garnitures de freins de chemins de fer consistant en un liant organique contenant du caoutchouc nitrile, en des charges minérales, des lubrifiants, des métaux et éventuellement d'autres additifs usuels, caractérisé en ce qu'on emploie comme liant un mélange d'un caoutchouc nitrile et d'une résine de polybutadiène liquide réticulée par des peroxydes, moyennant quoi le rapport de mélange du caoutchouc nitrile à la résine de polybutadiène liquide s'étend de 1:10 à 10:1 et une partie des charges minérales est remplacée par des phosphates alcalins, alcalino-terreux et/ou d'ammonium, respectivt. par leurs mono- ou dihydrogénophosphates à raison de 7 à 40% en poids par rapport au mélange de matériaux de friction, le rapport de phosphate à la résine de polybutadiène liquide se situant dans la gamme de 3:3 à 10:3.

2. Matériau de friction selon la revendication 1, caractérisé en ce que du peroxyde de sodium est employé en tant que peroxyde.

3. Matériau de friction selon la revendication 1 ou 2, caractérisé en ce qu'un phosphate contenant de l'eau de cristallisation est utilisé en tant que phosphate.

4. Matériau de friction selon la revendication 1 ou 2, caractérisé en ce qu'un mélange de phosphate contenant de l'eau de cristallisation et de phosphate sans eau de cristallsation est utilisé en tant que phosphate.

# Fig.1

Beispiel 1 (△——△)
Beispiel 2 (□——□)
Basismischung (Beispiel 1) (○——○)

Reibungskoeffizient

Bremsung Nr.

EP 0 540 826 B1

# Fig.2

EP 0 540 826 B1

Diagramm

REIBWERTE FUER BREMSBELAEGE

TOLERANZBEREICH FUER DEN MITTLEREN REIBWERT $\mu_m$ UND DEM AUGENBLICKSREIBWERT $\mu_a$

$\mu$

0.50

0.46

Grenze der Augenblicksreibwerte $\mu_a$

0.42
0.40

0.42

0.39

Streuband $\mu_m$

Nennreibwert $\mu_m$

0.35

0.31
0.30

0.31

0.28

Grenze der Augenblicksreibwerte $\mu_a$

0.27

0.25

0.20

0.10

REIBWERT

0    10    20    30    40    50    60    70    80    90    100    110    120    130    140    150    160    170    180    190    200

Radgeschwindigkeit

km/h

EP 0 540 826 B1